# EUROPEAN PATENT APPLICATION

(11) **EP 3 901 504 A1**
(43) Date of publication of application: **27.10.2021**
(21) Application number: 19915115.0
(22) Date of filing: 25.12.2019
(51) Int. Cl.: F16L 19/12, F16J 15/08, F24F 1/0068, F24F 1/26

(54) **JOINT MEMBER AND UNIT FOR AIR CONDITIONING DEVICE**

(30) Priority: 15.02.2019 JP 2019025370
(71) Applicant: DAIKIN INDUSTRIES, LTD., Osaka-shi, Osaka 530-8323 (JP)
(72) Inventor: OHTANI Yasutaka, Osaka-shi, Osaka 530-8323 (JP); NOUCHI Yoshiteru, Osaka-shi, Osaka 530-8323 (JP)
(74) Representative: Hoffmann Eitle
(86) International application number: PCT/JP2019/050970
(87) International publication number: WO 2020/166219

(57) **Abstract**

A joint member (100) includes a nut (70) and a tubular member (80). The nut (70) has an internal thread portion (73) to be fastened to an external thread portion (62) of a joint body (61). A pipe (12) is inserted into the nut (70). The tubular member (80) is arranged in a space (S) surrounded by the joint body (61), the nut (70), and the pipe (12). The joint body (61) has a distal end portion that is tapered to have a smaller diameter toward a distal end and forms a first inclined surface (63). The tubular member (80) has a second inclined surface (81) that is in pressure contact with the first inclined surface (63). A joint sealing member (83) is provided on the second inclined surface (81) to seal a gap between the second inclined surface (81) and the first inclined surface (63).

## Description

### TECHNICAL FIELD

The present disclosure relates to a joint member and an air conditioner unit.

### BACKGROUND ART

Patent Document 1 discloses a joint member for use in an air conditioner or the like. The joint member includes a nut, and a sleeve housed in the nut. If the nut is fastened to a joint body with a pipe inserted into the nut, the sleeve is radially deformed to come into tight contact with the pipe. This allows the pipe to be fixed to the joint member. Providing a sealing layer on the inner surface of the sleeve enables sealing of the gap between the outer surface of the pipe and the inner surface of the sleeve.

### CITATION LIST

### PATENT DOCUMENT

Patent Document 1: Japanese Patent No. 5276215

### SUMMARY OF THE INVENTION

### TECHNICAL PROBLEM

In the joint member of Patent Document 1, sealing between an inclined surface of a tapered distal end portion of the joint body and an inclined surface of the sleeve facing the inclined surface of the tapered distal end portion is achieved through pressure contact between these inclined surfaces.

Loosening of the nut on the joint body reduces the pressure-contact force acting between the joint body and the sleeve. As a result, the sealing between the inclined surface of the tapered distal end portion of the joint body and the inclined surface of the sleeve is insufficient. This may cause moisture, oxygen, and any other substances to enter the pipe from outside, or may cause a refrigerant, refrigerating machine oil, or any other fluids to leak out of the pipe.

It is an object of the present disclosure to improve the sealing performance of a joint member.

### SOLUTION TO THE PROBLEM

A first aspect of the present disclosure is directed to a joint member including: a nut (70) having an internal thread portion (73) to be fastened to an external thread portion (62) of a joint body (61), a pipe (12) being inserted into the nut (70); and a tubular member (80) arranged in a space (S) surrounded by the joint body (61), the nut (70), and the pipe (12) in a connected state in which the nut (70) is fastened to the joint body (61) and in which the pipe (12) is inserted in the nut (70), wherein the joint body (61) has a distal end portion that is tapered to have a smaller diameter toward a distal end and forms a first inclined surface (63), the tubular member (80) has a second inclined surface (81) that is in pressure contact with the first inclined surface (63) of the joint body (61) in the connected state, and a joint sealing member (83) is provided on the second inclined surface (81) of the tubular member (80) to seal a gap between the second inclined surface (81) and the first inclined surface (63) of the joint body (61).

According to the first aspect, the tubular member (80) is arranged in the space (S) surrounded by the joint body (61), the nut (70), and the pipe (12). The tubular member (80) has the second inclined surface (81) that is in pressure contact with the first inclined surface (63) of the distal end portion of the joint body (61) in the connected state. The joint sealing member (83) is provided on the second inclined surface (81) of the tubular member (80) to seal the gap between the second inclined surface (81) and the first inclined surface (63) of the joint body (61). Thus, even if loosening of the nut (70) on the joint body (61) results in a reduction in the pressure contact force acting between the joint body (61) and the tubular member (80), it is possible to reduce insufficient sealing of the gap between the first inclined surface (63) of the distal end portion of the joint body (61) and the second inclined surface (81) of the tubular member (80). This can improve the sealing performance of the joint member.

A second aspect of the present disclosure is an embodiment of the first aspect. In the second aspect, the joint sealing member (83) has at least either water resistance or oxygen resistance, and is provided on at least an outer peripheral portion of the second inclined surface (81) of the tubular member (80).

According to the second aspect, the joint sealing member (83) with at least either water resistance or oxygen resistance is provided on at least the outer peripheral portion of the second inclined surface (81) of the tubular member (80). This can substantially prevent water or oxygen from entering the pipe (12) from outside.

A third aspect of the present disclosure is an embodiment of the first or second aspect. In the third aspect, the joint sealing member (83) has at least either refrigerant resistance or refrigerating machine oil resistance, and is provided on at least an inner peripheral portion of the second inclined surface (81) of the tubular member (80).

According to the third aspect, the joint sealing member (83) with at least either refrigerant resistance or refrigerating machine oil resistance is provided on at least the inner peripheral portion of the second inclined surface (81) of the tubular member (80). This can substantially prevent a refrigerant or refrigerating machine oil from leaking out of the pipe (12).

A fourth aspect of the present disclosure is an embodiment of any one of the first to third aspects. In the fourth aspect, the joint sealing member (83) is made of a metal material.

According to the fourth aspect, a metal sealing material with high resistance to water, oxygen, refrigerants, refrigerating machine oil, and other substances is used as the joint sealing member (83). This can substantially prevent moisture, oxygen, or any other substances from entering the pipe (12) from outside, and can substantially prevent the refrigerant, the refrigerating machine oil, or any other substances from leaking out of the pipe (12).

A fifth aspect of the present disclosure is an embodiment of any one of the first to fourth aspects. In the fifth aspect, the joint sealing member (83) is fitted in a groove (86) formed on the second inclined surface (81) of the tubular member (80).

According to the fifth aspect, for example, an O-ring can be fitted, as the joint sealing member (83), in the groove (86) on the second inclined surface (81) of the tubular member (80).

A sixth aspect of the present disclosure is an embodiment of any one of the first to fifth aspects. A joint member according to the sixth aspect further includes: a pipe sealing member (85) arranged on an inner surface of the tubular member (80) to seal a gap between the inner surface of the tubular member (80) and an outer surface of the pipe (12).

According to the sixth aspect, the pipe sealing member (85) is provided on the inner surface of the tubular member (80) to seal the gap between the inner surface of the tubular member (80) and the outer surface of the pipe (12). Thus, the gap between the inner surface of the tubular member (80) and the outer surface of the pipe (12) can be sealed. In this case, a groove, for example, may be formed on the inner surface of the tubular member (80), and an O-ring may be fitted in the groove as the pipe sealing member (85).

A seventh aspect of the present disclosure is an embodiment of any one of the first to sixth aspects. In the seventh aspect, the joint sealing member (83) continuously extends from a portion of the second inclined surface (81) of the tubular member (80) to a portion of the inner surface of the tubular member (80).

According to the seventh aspect, a portion of the joint sealing member (83) covering the portion of the inner surface of the tubular member (80) can seal the gap between the inner surface of the tubular member (80) and the outer surface of the pipe (12).

An eighth aspect of the present disclosure is an embodiment of any one of the first to seventh aspects. In the eighth aspect, the tubular member (80) fixes the pipe (12) to the joint body (61) in the connected state.

According to the eighth aspect, the tubular member (80) fixes the pipe (12) to the joint body (61). This eliminates the need for providing a separate pipe fixing member. This can reduce the number of parts of the joint member, and can reduce the joint size.

A ninth aspect of the present disclosure is an embodiment of any one of the first to eighth aspects. A joint member according to the ninth aspect further includes: a pipe fixing member (90) arranged in the space (S) to fix the pipe (12) to the joint body (61) in the connected state.

According to the ninth aspect, the pipe fixing member (90) is provided to fix the pipe (12) to the joint body (61). Thus, the pipe (12) can be more reliably fixed.

A tenth aspect of the present disclosure is directed to an air conditioner unit for use in an air conditioner (10). The air conditioner unit has a unit-side refrigerant flow path (21, 41) connected to a connection pipe (12A, 12B). The air conditioner unit includes: the joint member of any one of the first to ninth aspects used for connection between the unit-side refrigerant flow path (21, 41) and the connection pipe (12A, 12B).

According to the tenth aspect, the joint member according to an aspect of the present disclosure is used for connection between the unit-side refrigerant flow path (21, 41) and connection pipe (12A, 12B) of the air conditioner unit. This can substantially prevent moisture, oxygen, or any other substances from entering the connection pipe (12A, 12B) from outside, and can substantially prevent the refrigerant, the refrigerating machine oil, or any other substances from leaking out of the connection pipe (12A, 12B).

### BRIEF DESCRIPTION OF THE DRAWINGS

FIG. 1 is an enlarged vertical sectional view illustrating an unconnected state of a joint member according to an embodiment, in which a pipe is not connected yet.
FIG. 2 is an enlarged vertical sectional view illustrating a partly-connected state of the joint member according to the embodiment, in which the pipe is inserted into the joint member, but a tubular member is not deformed yet.
FIG. 3 is an enlarged vertical sectional view illustrating a connected state of the joint member according to the embodiment, in which the pipe is inserted into the joint member, and the tubular member is deformed by a nut fastened to the joint body.
FIG. 4 is a piping system diagram of an air conditioner including the joint member according to the embodiment.
FIG. 5 is an enlarged vertical sectional view illustrating a partly-connected state of a joint member according to a first variation, in which a pipe is inserted into the joint member, but a tubular member is not deformed yet.
FIG. 6 is an enlarged vertical sectional view illustrating a partly-connected state of a joint member according to a second variation, in which a pipe is inserted into the joint member, but a tubular member is not deformed yet.
FIG. 7 is an enlarged vertical sectional view illustrating a partly-connected state of a joint member according to a third variation, in which a pipe is inserted into the joint member, but a tubular member is not deformed yet.
FIG. 8 is an enlarged vertical sectional view illustrating a partly-connected state of a joint member according to a fourth variation, in which a pipe is inserted into the joint member, but a tubular member is not deformed yet.
FIG. 9 is an enlarged vertical sectional view illustrating a partly-connected state of a joint member according to a fifth variation, in which a pipe is inserted into the joint member, but a pipe fixing member is not deformed yet.
FIG. 10 is an enlarged vertical sectional view illustrating a partly-connected state of a joint member according to a sixth variation, in which a pipe is inserted into the joint member, but a pipe fixing member is not deformed yet.
FIG. 11 is an enlarged vertical sectional view illustrating a partly-connected state of a joint member according to a seventh variation, in which a pipe is inserted into the joint member, but a pipe fixing member is not deformed yet.

### DESCRIPTION OF EMBODIMENTS

An embodiment of the present disclosure will be described below with reference to the drawings. The embodiment described below is merely an exemplary one in nature, and is not intended to limit the scope, applications, or use of the invention.

### <Configuration of Joint Member>

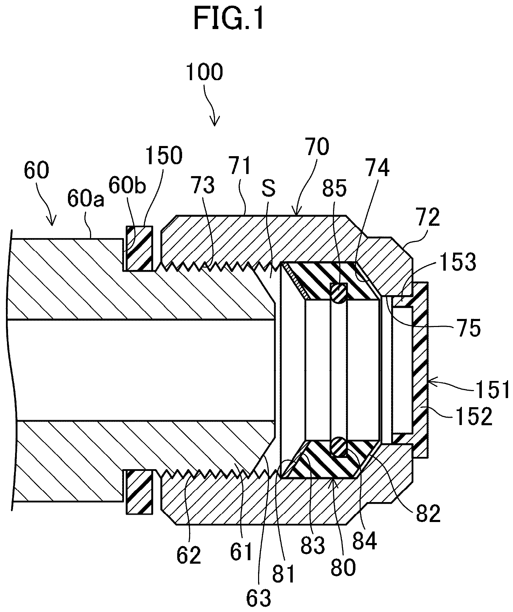

As illustrated in FIGS. 1 to 3, a joint member (100) according to this embodiment includes a nut (70) screwed onto a joint body (61), and a tubular member (80) encompassed in the nut (70).

The joint body (61) is configured as an end portion of a pipe (60) serving as a refrigerant flow path, for example. An outer surface of the joint body (61) has an external thread portion (62). The joint body (61) has a distal end portion that is tapered to have a smaller diameter toward the distal end and forms a first inclined surface (63). The joint body (61) is configured not only as the end portion of the pipe (60) but also as an end portion of a shut-off valve, for example.

The nut (70) has a substantially tubular nut body (71), and a smaller-diameter nut portion (72) having a smaller diameter from the nut body (71) toward the outside in the axial direction of the tubular shape. A pipe (12) to be connected to the joint body (61) (the end portion of the pipe (60)) is inserted into the nut (70). An inner surface of the nut body (71) has an internal thread portion (73) to be fastened to the external thread portion (62) of the joint body (61). An inner wall surface (74) of the smaller-diameter nut portion (72) may be, for example, an inclined surface that is closer to the central axis of the tubular shape toward the axial outer end thereof. The smaller-diameter nut portion (72) has a nut opening (75) that communicates with the inside of the pipe (60).

The tubular member (80) is housed in a space (S) surrounded by the joint body (61), the nut (70), and the pipe (12) and surrounds the outer surface of the pipe (12). The tubular member (80) may be formed into a tubular or substantially tubular shape. The axial length of the tubular member (80) may be shorter than the diameter of the tubular member (80).

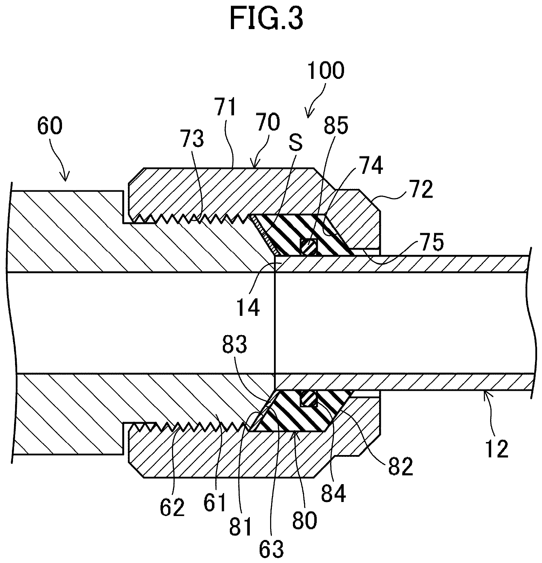

The tubular member (80) may be made of a material that is plastically deformed by an axial compressive force. Such a tubular member (80) is plastically deformed by an axial compressive force in a state in which the nut (70) is fastened to the joint body (61) and in which the pipe (12) is inserted in the nut (70) as illustrated in FIG. 3 (hereinafter referred to as the "connected state"), which allows the pipe (12) to be fixed to the joint body (61).

The tubular member (80) has a second inclined surface (81) on an axial end portion near the joint body (61). The second inclined surface (81) is further apart from the central axis of the tubular shape in a direction toward the joint body (61). The second inclined surface (81) of the tubular member (80) conforms in shape to the first inclined surface (63) of the joint body (61), and is in pressure contact with the first inclined surface (63) in the connected state (see FIG. 3).

The tubular member (80) has a side wall surface (82) on an axial end portion remote from the joint body (61). The side wall surface (82) may be, for example, an inclined surface that is further apart from the central axis of the tubular shape in the direction toward the joint body (61). The side wall surface (82) of the tubular member (80) conforms in shape to the inner wall surface (74) of the smaller-diameter nut portion (72).

A joint sealing member (83) is provided on the second inclined surface (81) of the tubular member (80) to seal the gap between the second inclined surface (81) and the first inclined surface (63) of the joint body (61). The joint sealing member (83) may be, for example, a sealing layer made of a metal material with high resistance to water, oxygen, refrigerants, refrigerating machine oil, and other substances.

The inner surface of the tubular member (80) has an annular groove (84) having the same axis as the tubular member (80). A pipe sealing member (85), which is in contact with the outer surface of the pipe (12) in the connected state (see FIG. 3), is provided in the groove (84). This configuration allows the gap between the inner surface of the tubular member (80) and the outer surface of the pipe (12) to be sealed. The pipe sealing member (85) may be, for example, an O-ring fitted in the groove (84).

As illustrated in FIG. 1, in a state in which the pipe (12) is not connected to the joint member (100) (hereinafter referred to as the "unconnected state"), a ring-shaped spacer (150) may be arranged between a base portion (60a) of the pipe (60) and the nut (70). The spacer (150) faces a step surface (60b) of the pipe (60). The spacer (150) substantially prevents the nut (70) from being tightened toward the joint body (61) in the unconnected state. The spacer (150) may be made of an elastically deformable resin material. The spacer (150) may have a slit to form a C-shape. Such a spacer (150) can be easily detached without detaching the nut (70).

Alternatively, as illustrated in FIG. 1, in the unconnected state, a lid member (151) may be fitted into the nut opening (75) of the nut (70). The lid member (151) may include a disk-shaped closing portion (152), and a tubular insertion portion (153) protruding from the closing portion (152) toward the back of the nut opening (75). The closing portion (152) closes the nut opening (75). The insertion portion (153) is fitted into the nut opening (75). The lid member (151) may be made of an elastically deformable resin material.

### <Pipe Connection Through Joint Member>

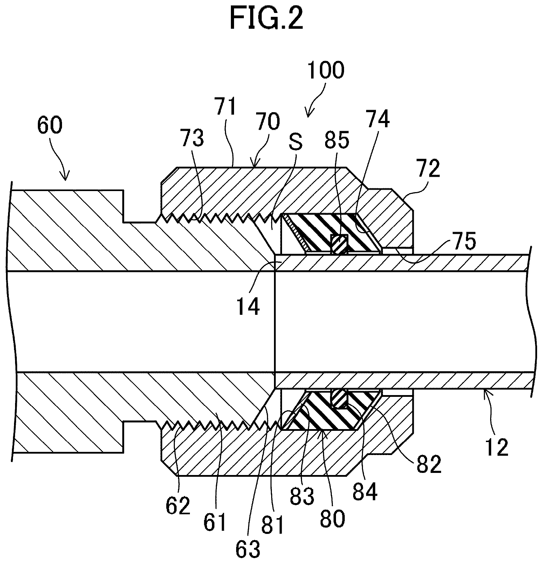

If the joint member (100) is used to connect the pipe (12) to the joint body (61) (the end portion of the pipe (60)), the spacer (150) and the lid member (151) are detached first, and a straight portion (14) of the pipe (12) is then inserted into the nut (70) and the tubular member (80), as illustrated in FIG. 2. In the state illustrated in FIG. 2, i.e., the state where the pipe (12) is inserted into the joint member (100), but the tubular member (80) is not deformed yet (hereinafter referred to as the "partly-connected state"), the straight portion (14) of the pipe (12) is in contact with the distal end of the joint body (61), and the interiors of the pipes (12) and (60) communicate with each other. In this state, the tubular member (80) is loosely fitted into the space (S) in its axial direction.

As illustrated in FIG. 3, further fastening the nut (70) in the partly-connected state onto the joint body (61) allows the inner wall surface (74) of the smaller-diameter nut portion (72) to press the side wall surface (82) of the tubular member (80). This allows the second inclined surface (81) of the tubular member (80) to be in pressure contact with the first inclined surface (63) of the joint body (61) with the joint sealing member (83) interposed therebetween. Thus, the joint sealing member (83) seals the gap between the first inclined surface (63) of the joint body (61) and the second inclined surface (81) of the tubular member (80).

In the state illustrated in FIG. 3, i.e., in the connected state, the tubular member (80) is axially compressed to be plastically deformed in the radial direction. Thus, the inner surface of the tubular member (80) is in tight surface contact with the outer surface of the straight portion (14) of the pipe (12). The pressing force of the tubular member (80) acting on the straight portion (14) of the pipe (12) causes the straight portion (14) of the pipe (12) to be fixed to the joint body (61). Thus, connection between the pipes (12) and (60) is completed.

### <Configuration of Air Conditioner Unit>

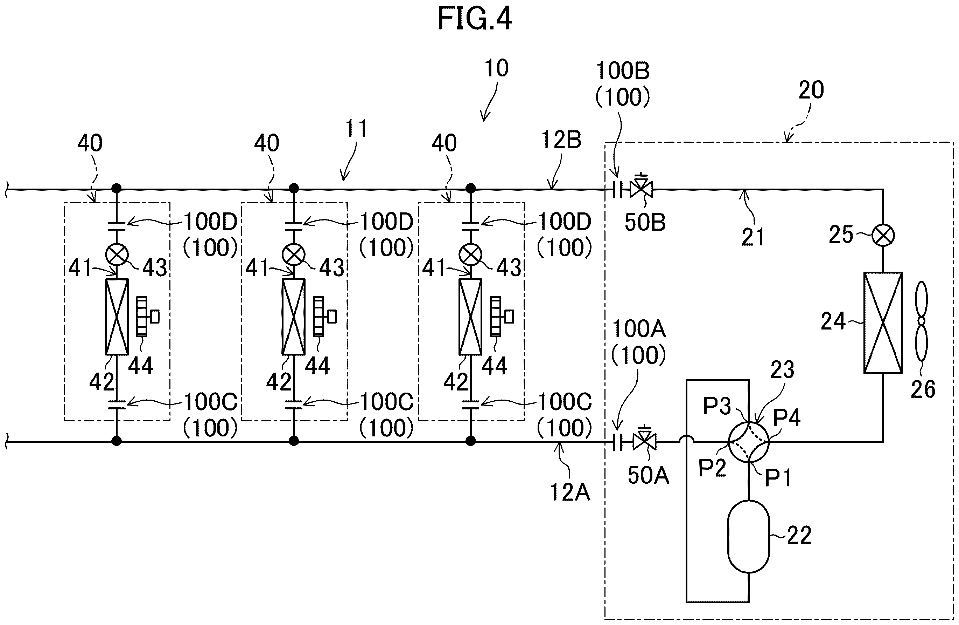

As shown in FIG. 4, an air conditioner unit according to this embodiment includes an outdoor unit (20) and indoor units (40), and is used for an air conditioner (10). The air conditioner unit according to the present disclosure has a unit-side refrigerant flow path (21, 41) connected to connection pipes (12A, 12B). The joint member (100) of this embodiment is used to connect the unit-side refrigerant flow path (21, 41) to the connection pipes (12A, 12B).

The outdoor unit (20) and the indoor units (40) are connected together via a gas connection pipe (12A) and a liquid connection pipe (12B) on site. Thus, the air conditioner (10) having a refrigerant circuit (11) is assembled. The refrigerant circuit (11) is filled with a refrigerant which circulates to perform a refrigeration cycle.

The air conditioner (10) includes a single outdoor unit (20), three indoor units (40), the gas connection pipe (12A), and the liquid connection pipe (12B). The outdoor unit (20) may include two or more outdoor units. The number of the indoor units (40) may be one, two, or four or more. The outdoor unit (20) is placed outside. Each of the indoor units (40) is placed inside. The indoor units (40) of this embodiment are of a ceiling-mounted type, and are embedded in the ceiling surface. The outdoor unit (20) and the indoor units (40) are connected together via the gas connection pipe (12A) and the liquid connection pipe (12B).

The outdoor unit (20) has an outdoor refrigerant flow path (21). The outdoor refrigerant flow path (21) constitutes a unit-side refrigerant flow path. The outdoor refrigerant flow path (21) connects a compressor (22), a four-way switching valve (23), an outdoor heat exchanger (24), and an outdoor expansion valve (25). The four-way switching valve (23) has four ports (PI, P2, P3, P4). The four-way switching valve (23) switches between a first state indicated by solid curves in FIG. 4 and a second state indicated by broken curves in FIG. 4. The four-way switching valve (23) in the first state makes the first and fourth ports (P1) and (P4) communicate with each other, and the second and third ports (P2) and (P3) communicate with each other at the same time. The four-way switching valve (23) in the second state makes the first and second ports (P1) and (P2) communicate with each other, and the third and fourth ports (P3) and (P4) communicate with each other at the same time.

The outdoor unit (20) is provided with an outdoor fan (26). The outdoor fan (26) transfers air passing through the outdoor heat exchanger (24). The outdoor heat exchanger (24) transfers heat between the refrigerant flowing therethrough and outdoor air.

A gas-side end of the outdoor refrigerant flow path (21) is connected to a gas shut-off valve (50A). A liquid-side end of the outdoor refrigerant flow path (21) is connected to a liquid-side shut-off valve (50B).

Although not shown, the joint body (61) of this embodiment is provided at an end of the gas-side shut-off valve (50A). Thus, as shown in FIG. 4, the gas-side end of the outdoor refrigerant flow path (21) and the gas connection pipe (12A) are connected together using a first joint member (100A), which is equivalent to the joint member (100) of this embodiment.

Although not shown, the joint body (61) of this embodiment is further provided at an end of the liquid-side shut-off valve (50B). Thus, as shown in FIG. 4, the liquid-side end of the outdoor refrigerant flow path (21) and the liquid connection pipe (12B) are connected together using a second joint member (100B), which is equivalent to the joint member (100) of this embodiment.

Each of the indoor units (40) has an indoor refrigerant flow path (41). The indoor refrigerant flow path (41) constitutes a unit-side refrigerant flow path. Each of the indoor refrigerant flow paths (41) connects an indoor heat exchanger (42) and an indoor expansion valve (43). Each of the indoor units (40) is provided with an indoor fan (44). The indoor fan (44) transfers air passing through the indoor heat exchanger (42). The indoor heat exchanger (42) transfers heat between the refrigerant flowing therethrough and the air.

Although not shown, the joint body (61) of this embodiment is provided at a gas-side end of each indoor refrigerant flow path (41). Thus, as shown in FIG. 4, the gas-side end of each of the indoor refrigerant flow paths (41) and the gas connection pipe (12A) are connected together using a third joint member (100C), which is equivalent to the joint member (100) of this embodiment.

Although not shown, the joint body (61) of this embodiment is provided at a liquid-side end of each indoor refrigerant flow path (41). Thus, as shown in FIG. 4, the liquid-side end of the indoor refrigerant flow path (41) and the liquid connection pipe (12B) are connected together using a fourth joint member (100D), which is equivalent to the joint member (100) of this embodiment.

### -Operation-

The air conditioner (10) performs a cooling operation and a heating operation.

In the cooling operation, the four-way switching valve (23) is brought into the first state. The refrigerant compressed in the compressor (22) dissipates heat and is condensed in the outdoor heat exchanger (24). Then, the condensed refrigerant is sent to the indoor units (40). In each indoor unit (40), the refrigerant is decompressed by the indoor expansion valve (43), and then flows through the indoor heat exchanger (42). In the indoor heat exchanger (42), the refrigerant absorbs heat from the air and evaporates. The air cooled by the indoor heat exchanger (42) is supplied into the room. The evaporated refrigerant is sucked into the compressor (22).

In the heating operation, the four-way switching valve (23) is brought into the second state. The refrigerant compressed in the compressor (22) is sent to the indoor units (40). In each indoor unit (40), the refrigerant dissipates heat in the indoor heat exchanger (42) and condenses. The air heated by the indoor heat exchanger (42) is supplied into the room. The condensed refrigerant is decompressed by the outdoor expansion valve (25), and then evaporates in the outdoor heat exchanger (24). The evaporated refrigerant is sucked into the compressor (22).

### - Advantages of Embodiment -

The joint member (100) of this embodiment described above includes the nut (70) and the tubular member (80). The nut (70) has the internal thread portion (73) to be fastened to the external thread portion (62) of the joint body (61). The pipe (12) is inserted into the nut (70). The tubular member (80) is arranged in the space (S) surrounded by the joint body (61), the nut (70), and the pipe (12), and has the second inclined surface (81) in pressure contact with the first inclined surface (63) of the distal end portion of the joint body (61) in the connected state. The joint sealing member (83) is provided on the second inclined surface (81) of the tubular member (80) to seal the gap between the second inclined surface (81) and the first inclined surface (63) of the joint body (61).

According to this configuration, even if loosening of the nut (70) on the joint body (61) results in a reduction in the pressure contact force acting between the joint body (61) and the tubular member (80), the joint sealing member (83) can seal the gap between the first inclined surface (63) of the distal end portion of the joint body (61) and the second inclined surface (81) of the tubular member (80). This can improve the sealing performance of the joint member (100).

In the joint member (100) of this embodiment, a metal sealing material with high resistance to water, oxygen, refrigerants, refrigerating machine oil, and other substances is used as the joint sealing member (83) provided on the second inclined surface (81) of the tubular member (80). This can substantially prevent moisture, oxygen, or any other substances from entering the pipe (12) from outside, and can substantially prevent the refrigerant, the refrigerating machine oil, or any other substances from leaking out of the pipe (12).

The joint member (100) of this embodiment includes the pipe sealing member (85) provided on the inner surface of the tubular member (80) to seal the gap between the inner surface of the tubular member (80) and the outer surface of the pipe (12). Thus, the gap between the inner surface of the tubular member (80) and the outer surface of the pipe (12) can be sealed. In this case, just like this embodiment, the groove (84) may be formed on the inner surface of the tubular member (80), and an O-ring may be fitted in the groove (84) as the pipe sealing member (85). Alternatively, a sealing layer made of, for example, a fluororesin may be provided, as the pipe sealing member (85), on the inner surface of the tubular member (80) without forming the groove (84) on the inner surface of the tubular member (80).

The tubular member (80) of the joint member (100) of this embodiment fixes the pipe (12) to the joint body (61) in the connected state. This eliminates the need for providing a separate pipe fixing member. This can reduce the number of parts of the joint member, and can reduce the joint size.

The air conditioner units according to this embodiment (the outdoor and indoor units (20), (40)) each have the unit-side refrigerant flow path (21, 41) connected to the connection pipes (12A, 12B). The joint member (100) of this embodiment is used to connect the unit-side refrigerant flow path (21, 41) to the connection pipes (12A, 12B). This can substantially prevent moisture, oxygen, or any other substances from entering the connection pipes (12A, 12B) from outside, and can substantially prevent the refrigerant, the refrigerating machine oil, or any other substances from leaking out of the connection pipes (12A, 12B).

### <First Variation>

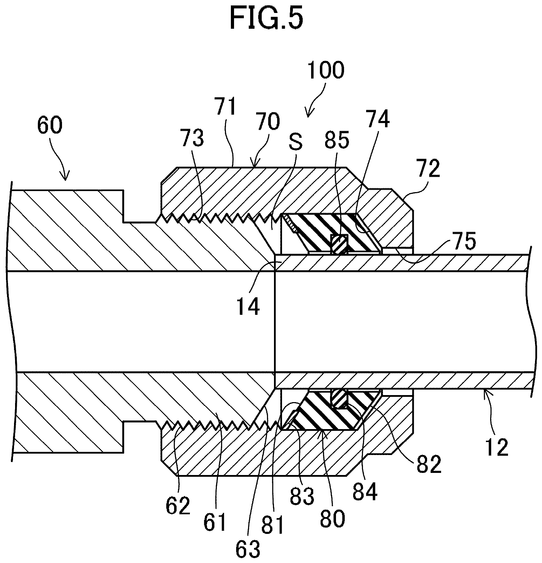

FIG. 5 is an enlarged vertical sectional view illustrating a partly-connected state of a joint member (100) according to a first variation, in which a pipe (12) is inserted into the joint member (100), but a tubular member (80)is not deformed yet. In FIG. 5, the same components as those of the foregoing embodiment illustrated in FIGS. 1 to 3 are designated by the same reference characters.

The first variation is distinct from the foregoing embodiment in that as illustrated in FIG. 5, a joint sealing member (83) has at least either water resistance or oxygen resistance, and is provided on at least an outer peripheral portion of the second inclined surface (81) of the tubular member (80). The joint sealing member (83) may be, for example, a sealing layer made of a resin or any other material with at least either water resistance or oxygen resistance.

According to the first variation, the joint sealing member (83) with at least either water resistance or oxygen resistance is provided on at least the outer peripheral portion of the second inclined surface (81) of the tubular member (80). This can substantially prevent water or oxygen from entering the pipe (12) from outside.

### <Second Variation>

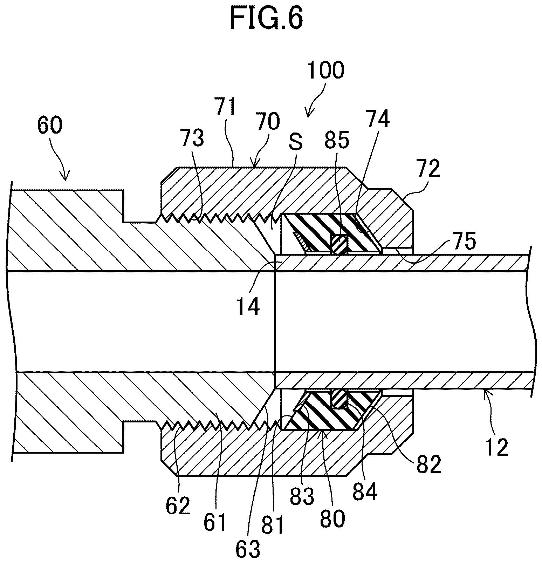

FIG. 6 is an enlarged vertical sectional view illustrating a partly-connected state of a joint member (100) according to a second variation, in which a pipe (12) is inserted into the joint member (100), but a tubular member (80) is not deformed yet. In FIG. 6, the same components as those of the foregoing embodiment illustrated in FIGS. 1 to 3 are designated by the same reference characters.

The second variation is distinct from the foregoing embodiment in that as illustrated in FIG. 6, a joint sealing member (83) has at least either refrigerant resistance or refrigerating machine oil resistance, and is provided on at least an inner peripheral portion of the second inclined surface (81) of the tubular member (80). The joint sealing member (83) may be, for example, a sealing layer made of a resin or any other material with at least either refrigerant resistance or refrigerating machine oil resistance.

According to the second variation, the joint sealing member (83) with at least either refrigerant resistance or refrigerating machine oil resistance is provided on at least the inner peripheral portion of the second inclined surface (81) of the tubular member (80). This can substantially prevent a refrigerant or refrigerating machine oil from leaking out of the pipe (12).

### <Third Variation>

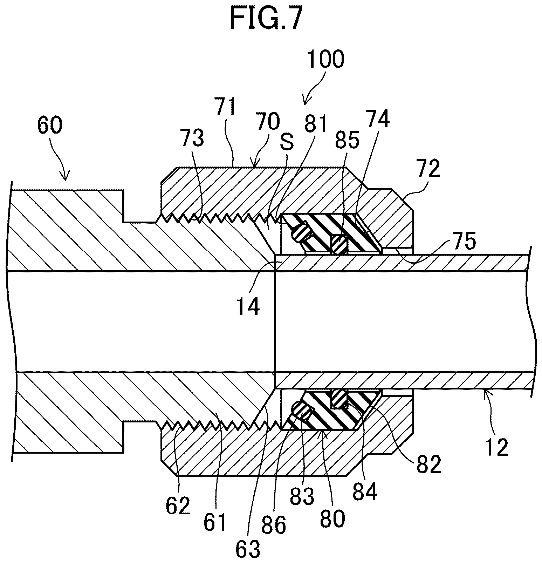

FIG. 7 is an enlarged vertical sectional view illustrating a partly-connected state of a joint member (100) according to a third variation, in which a pipe (12) is inserted into the joint member (100), but a tubular member (80) is not deformed yet. In FIG. 7, the same components as those of the foregoing embodiment illustrated in FIGS. 1 to 3 are designated by the same reference characters.

The third variation is distinct from the foregoing embodiment in that as illustrated in FIG. 7, a joint sealing member (83) is fitted in a groove (86) formed on a second inclined surface (81) of the tubular member (80).

According to the third variation, for example, an O-ring can be fitted, as the joint sealing member (83), in the groove (86) of the second inclined surface (81) of the tubular member (80).

### <Fourth Variation>

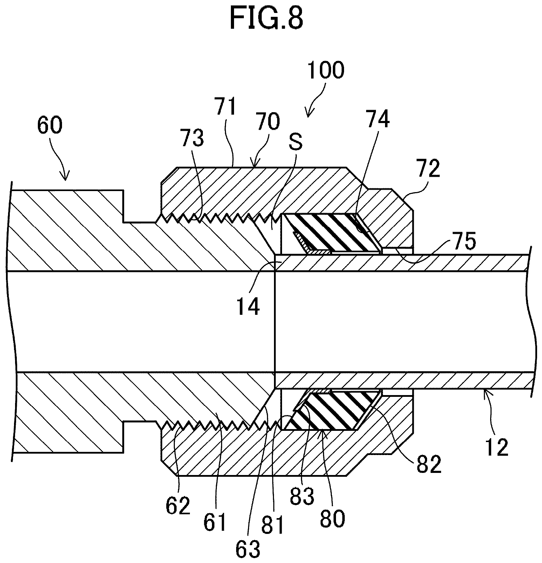

FIG. 8 is an enlarged vertical sectional view illustrating a partly-connected state of a joint member (100) according to a fourth variation, in which a pipe (12) is inserted into the joint member (100), but a tubular member (80) is not deformed yet. In FIG. 8, the same components as those of the foregoing embodiment illustrated in FIGS. 1 to 3 are designated by the same reference characters.

The fourth variation is distinct from the foregoing embodiment in that as illustrated in FIG. 8, a joint sealing member (83) continuously extends from a portion of the second inclined surface (81) of the tubular member (80) to a portion of the inner surface of the tubular member (80).

According to the fourth variation, the portion of the joint sealing member (83) covering the portion of the inner surface of the tubular member (80) can seal the gap between the inner surface of the tubular member (80) and the outer surface of the pipe (12). This eliminates the need for providing the pipe sealing member (85), unlike the foregoing embodiment. Thus, the manufacturing process can be simplified.

In the fourth variation, to improve the sealing performance between the inner surface of the tubular member (80) and the outer surface of the pipe (12), a pipe sealing member in contact with the outer surface of the pipe (12) may be provided.

### <Fifth Variation>

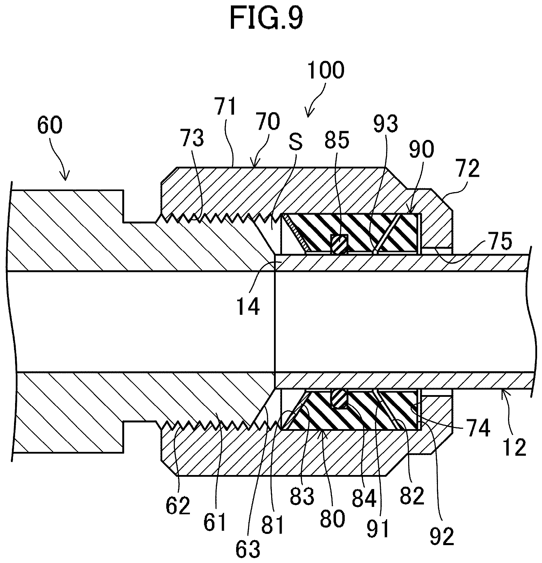

FIG. 9 is an enlarged vertical sectional view illustrating a partly-connected state of a joint member (100) according to a fifth variation, in which a pipe (12) is inserted into the joint member (100), but a pipe fixing member (90), described later, is not deformed yet. In FIG. 9, the same components as those of the foregoing embodiment illustrated in FIGS. 1 to 3 are designated by the same reference characters. The fifth variation is distinct from the foregoing embodiment as follows.

As illustrated in FIG. 9, the tubular member (80) is spaced apart from the smaller-diameter nut portion (72). The pipe fixing member (90) surrounding the outer surface of the pipe (12) is arranged in a portion of the space (S) between the tubular member (80) and the smaller-diameter nut portion (72). The pipe fixing member (90) is made of a material that is plastically deformed by an axial compressive force. The axial length of the pipe fixing member (90) may be shorter than that of the tubular member (80).

The side wall surface (82) of the tubular member (80) near the smaller-diameter nut portion (72) is an inclined surface that is closer to the central axis of the tubular shape toward the joint body (61). The pipe fixing member (90) has a third inclined surface (91) at an axial end portion toward the joint body (61). The third inclined surface (91) is closer to the central axis of the tubular shape toward the joint body (61). The third inclined surface (91) of the pipe fixing member (90) conforms in shape to the side wall surface (82) of the tubular member (80), and is in pressure contact with the side wall surface (82) in the connected state.

The inner wall surface (74) of the smaller-diameter nut portion (72) may be perpendicular to the outer surface of the pipe (12), for example. The pipe fixing member (90) has a side wall surface (92) on an axial end portion remote from the joint body (61). The side wall surface (92) may be perpendicular to the outer surface of the pipe (12), for example. The side wall surface (92) of the pipe fixing member (90) conforms in shape to the inner wall surface (74) of the smaller-diameter nut portion (72), and is in pressure contact with the inner wall surface (74) in the connected state.

Further fastening the nut (70) in the partly-connected state illustrated in FIG. 9 to the joint body (61) allows the inner wall surface (74) of the smaller-diameter nut portion (72) to press the side wall surface (92) of the pipe fixing member (90). This allows the third inclined surface (91) of the pipe fixing member (90) to press the side wall surface (82) of the tubular member (80). Thus, the second inclined surface (81) of the tubular member (80) is brought into pressure contact with the first inclined surface (63) of the joint body (61) with a joint sealing member (83) interposed therebetween. As a result, the gap between the first inclined surface (63) of the joint body (61) and the second inclined surface (81) of the tubular member (80) is sealed.

On the other hand, the side wall surface (82) of the tubular member (80) presses the third inclined surface (91) of the pipe fixing member (90) due to reaction, which causes radially inward displacement of the end portion of the pipe fixing member (90) near the tubular member (80). As a result, an inner edge (93) of the pipe fixing member (90) is engaged in the outer surface of a straight portion (14) of the pipe (12). The pipe (12) is thus fixed to the joint body (61).

As described above, according to the fifth variation, the pipe fixing member (90) is provided to fix the pipe (12) to the joint body (61). Thus, the pipe (12) can be more reliably fixed.

In the fifth variation, in addition to the pipe fixing member (90), the tubular member (80) may also fix the pipe (12), just like the foregoing embodiment.

### <Sixth Variation>

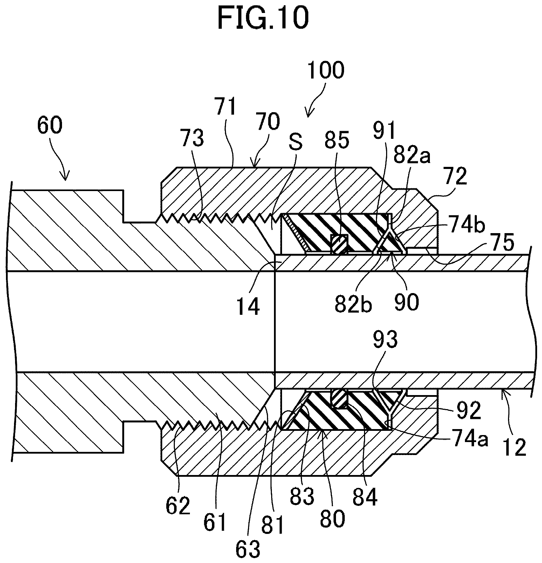

FIG. 10 is an enlarged vertical sectional view illustrating a partly-connected state of a joint member (100) according to a sixth variation, in which a pipe (12) is inserted into the joint member (100), but a pipe fixing member (90), described later, is not deformed yet. In FIG. 10, the same components as those of the foregoing embodiment illustrated in FIGS. 1 to 3 are designated by the same reference characters. The sixth variation is distinct from the foregoing embodiment as follows.

As illustrated in FIG. 10, the pipe fixing member (90) surrounding the outer surface of the pipe (12) is arranged in a portion of the space (S) between a tubular member (80) and the smaller-diameter nut portion (72). The pipe fixing member (90) is made of a material that is plastically deformed by an axial compressive force. The axial length of the pipe fixing member (90) may be shorter than that of the tubular member (80).

The smaller-diameter nut portion (72) has a radially-outside inner wall surface (74a) perpendicular to the outer surface of the pipe (12), and a radially-inside inner wall surface (74b) further apart from the central axis of the tubular shape toward the joint body (61).

The tubular member (80) has, on the side toward the smaller-diameter nut portion (72), a radially-outside side wall surface (82a) perpendicular to the outer surface of the pipe (12), and a radially-inside side wall surface (82b) closer to the central axis of the tubular shape toward the joint body (61). The radially-outside side wall surface (82a) of the tubular member (80) conforms in shape to the radially-outside inner wall surface (74a) of the smaller-diameter nut portion (72), and is brought into pressure contact with the radially-outside inner wall surface (74a) in the connected state.

The pipe fixing member (90) is surrounded by the radially-inside side wall surface (82b) of the tubular member (80), the radially-inside inner wall surface (74b) of the smaller-diameter nut portion (72), and the outer surface of the pipe (12).

The pipe fixing member (90) has a third inclined surface (91) at an axial end portion toward the joint body (61). The third inclined surface (91) is closer to the central axis of the tubular shape toward the joint body (61). The third inclined surface (91) of the pipe fixing member (90) conforms in shape to the radially-inside side wall surface (82b) of the tubular member (80), and is brought into pressure contact with the radially-inside side wall surface (82b) in the connected state.

The pipe fixing member (90) has a side wall surface (92) on an axial end portion remote from the joint body (61). The side wall surface (92) may be, for example, an inclined surface that is further apart from the central axis of the tubular shape in the direction toward the joint body (61). The side wall surface (92) of the pipe fixing member (90) conforms in shape to the radially-inside inner wall surface (74b) of the smaller-diameter nut portion (72), and is brought into pressure contact with the radially-inside inner wall surface (74b) in the connected state.

Further fastening the nut (70) in the partly-connected state illustrated in FIG. 10 to the joint body (61) allows the radially-outside inner wall surface (74a) of the smaller-diameter nut portion (72) to press the radially-outside side wall surface (82a) of the tubular member (80). Thus, the second inclined surface (81) of the tubular member (80) is brought into pressure contact with the first inclined surface (63) of the joint body (61) with a joint sealing member (83) interposed therebetween. As a result, the gap between the first inclined surface (63) of the joint body (61) and the second inclined surface (81) of the tubular member (80) is sealed.

The radially-inside inner wall surface (74b) of the smaller-diameter nut portion (72) presses the side wall surface (92) of the pipe fixing member (90), which causes the third inclined surface (91) of the pipe fixing member (90) to press the radially-inside side wall surface (82b) of the tubular member (80). This increases the pressure contact force between the tubular member (80) and the joint body (61), thus improving the sealing performance between the first inclined surface (63) of the joint body (61) and the second inclined surface (81) of the tubular member (80).

On the other hand, the radially-inside side wall surface (82b) of the tubular member (80) presses the third inclined surface (91) of the pipe fixing member (90) back due to reaction, which causes radially inward displacement of the end portion of the pipe fixing member (90) near the tubular member (80). As a result, an inner edge (93) of the pipe fixing member (90) is engaged in the outer surface of a straight portion (14) of the pipe (12). The pipe (12) is thus fixed to the joint body (61).

As described above, according to the sixth variation, the pipe fixing member (90) is provided to fix the pipe (12) to the joint body (61). Thus, the pipe (12) can be more reliably fixed.

In the sixth variation, in addition to the pipe fixing member (90), the tubular member (80) may also fix the pipe (12), just like the foregoing embodiment.

### <Seventh Variation>

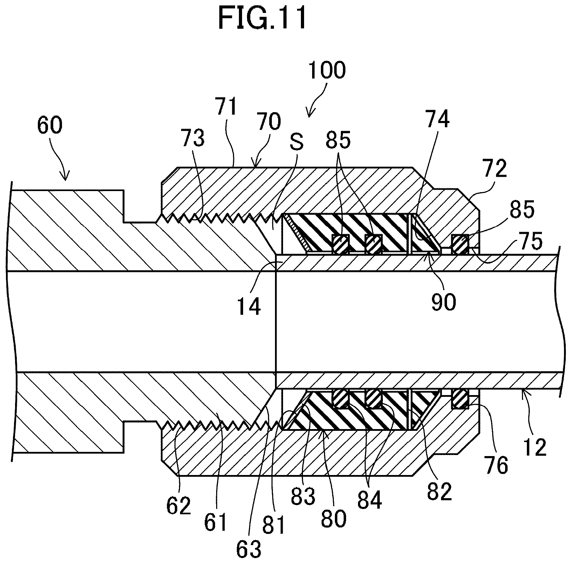

FIG. 11 is an enlarged vertical sectional view illustrating a partly-connected state of a joint member (100) according to a seventh variation, in which a pipe (12) is inserted into the joint member (100), but a pipe fixing member (90), described later, is not deformed yet. In FIG. 11, the same components as those of the foregoing embodiment illustrated in FIGS. 1 to 3 are designated by the same reference characters. The seventh variation is distinct from the foregoing embodiment as follows.

As illustrated in FIG. 11, the tubular member (80) is spaced apart from the smaller-diameter nut portion (72). The pipe fixing member (90) surrounding the outer surface of the pipe (12) is arranged in a portion of a space (S) between the tubular member (80) and the smaller-diameter nut portion (72). The pipe fixing member (90) includes, for example, a leverage ring having a plurality of holes in the circumferential direction, and a plurality of leverage cones respectively fitted into the holes.

The inner surface of the smaller-diameter nut portion (72) has an annular groove (76) coaxial with the nut (70). The inner surface of the tubular member (80) has two annular grooves (84) coaxial with the tubular member (80). A pipe sealing member (85), which is in contact with the outer surface of the pipe (12) in the connection state, is provided in each of the grooves (76) and (84). As a result, the gap between the inner surface of each of the smaller-diameter nut portion (72) and the tubular member (80) and the outer surface of the pipe (12) is sealed. The pipe sealing member (85) may be, for example, an O-ring fitted in the groove (84).

Further fastening the nut (70) in the partly-connected state illustrated in FIG. 11 to the joint body (61) allows the inner wall surface (74) of the smaller-diameter nut portion (72) to press the pipe fixing member (90). This allows the pipe fixing member (90) to press the side wall surface (82) of the tubular member (80). Thus, the second inclined surface (81) of the tubular member (80) is brought into pressure contact with the first inclined surface (63) of the joint body (61) with a joint sealing member (83) interposed therebetween. As a result, the gap between the first inclined surface (63) of the joint body (61) and the second inclined surface (81) of the tubular member (80) is sealed.

The inner wall surface (74) of the smaller-diameter nut portion (72) presses the pipe fixing member (90), which causes the leverage cones retained by the leverage ring to be engaged in the outer surface of a straight portion (14) of the pipe (12). The pipe (12) is thus fixed to the joint body (61).

As described above, according to the seventh variation, the pipe fixing member (90) is provided to fix the pipe (12) to the joint body (61). Thus, the pipe (12) can be more reliably fixed.

In the seventh variation, in addition to the pipe fixing member (90), the tubular member (80) may also fix the pipe (12), just like the foregoing embodiment.

### <<Other Embodiments>>

In the foregoing embodiment and the variations thereof, the nut (70) and the tubular member (80) are separate members. However, the nut (70) and the tubular member (80) may be integrated into one member.

In each of the air conditioner units illustrated in FIG. 4 (the outdoor and indoor units (20), (40)), the joint member (100) of the present embodiment is used for connection between the unit-side refrigerant flow path (21, 41) and the connection pipes (12A, 12B). However, this use of the joint member (100) is merely an example. The joint member (100) of the present embodiment can be widely used to connect pipes through which gas, liquid, or any other substance flows.

For example, the joint member (100) of this embodiment is applicable to an air conditioner unit other than the outdoor and indoor units (20) and (40). Examples of such an air conditioner unit include a refrigerant flow path switching unit and a thermal storage unit. The refrigerant flow path switching unit selects one of refrigerant flow paths so that, for example, while one or more of the indoor units (40) perform a cooling operation, the other indoor unit(s) (40) performs a heating operation. The refrigerant flow path switching unit has a unit-side refrigerant flow path to which a switching valve, an on-off valve, and other components are connected. The thermal storage unit temporarily stores warm thermal energy or so-called cold thermal energy. The thermal storage unit has a unit-side refrigerant flow path to which a tank for thermal storage is connected.

While the embodiment and variations have been described above, it will be understood that various changes in form and details can be made without departing from the spirit and scope of the claims. The embodiment, the variations, and the other embodiments may be combined and replaced with each other as long as the functions of the target of the present disclosure are not impaired. In addition, the expressions of "first," "second," "third" and so on described above are used to distinguish the terms to which these expressions are given, and do not limit the number and order of the terms.

### INDUSTRIAL APPLICABILITY

The present disclosure is useful for a joint member and an air conditioner unit.

### DESCRIPTION OF REFERENCE CHARACTERS

- 10: Air Conditioner
- 11: Refrigerant Circuit
- 12: Pipe
- 12A: Gas Connection Pipe
- 12B: Liquid Connection Pipe
- 14: Straight Portion
- 20: Outdoor Unit
- 21: Outdoor Refrigerant Flow Path
- 22: Compressor
- 23: Four-Way Switching Valve
- 24: Outdoor Heat Exchanger
- 25: Outdoor Expansion Valve
- 26: Outdoor Fan
- 40: Indoor Unit
- 41: Indoor Refrigerant Flow Path
- 42: Indoor Heat Exchanger
- 43: Indoor Expansion Valve
- 44: Indoor Fan
- 50A: Gas-side Shut-off Valve
- 50B: Liquid-side Shut-off Valve
- 60: Pipe
- 61: Joint Body
- 62: External Thread Portion
- 63: First Inclined Surface
- 70: Nut
- 71: Nut Body
- 72: Smaller-diameter Nut Portion
- 73: Internal Thread Portion
- 74: Inner Wall Surface
- 75: Nut Opening
- 76: Groove
- 80: Tubular Member
- 81: Second Inclined Surface
- 82: Side Wall Surface
- 83: Joint Sealing Member
- 84: Groove
- 85: Pipe Sealing Member
- 86: Groove
- 90: Pipe Fixing Member
- 91: Third Inclined Surface
- 92: Side Wall Surface
- 93: Inner Edge
- 100, 100A, 100B, 100C, 100D: Joint Member
- 150: Spacer
- 151: Lid Member
- 152: Closing Portion
- 153: Insertion Portion

## Claims

1. A joint member comprising:
a nut (70) having an internal thread portion (73) to be fastened to an external thread portion (62) of a joint body (61), a pipe (12) being inserted into the nut (70); and
a tubular member (80) arranged in a space (S) surrounded by the joint body (61), the nut (70), and the pipe (12) in a connected state in which the nut (70) is fastened to the joint body (61) and in which the pipe (12) is inserted in the nut (70), wherein
the joint body (61) has a distal end portion that is tapered to have a smaller diameter toward a distal end and forms a first inclined surface (63),
the tubular member (80) has a second inclined surface (81) that is in pressure contact with the first inclined surface (63) of the joint body (61) in the connected state, and
a joint sealing member (83) is provided on the second inclined surface (81) of the tubular member (80) to seal a gap between the second inclined surface (81) and the first inclined surface (63) of the joint body (61).

2. The joint member of claim 1, wherein
the joint sealing member (83) has at least either water resistance or oxygen resistance, and is provided on at least an outer peripheral portion of the second inclined surface (81) of the tubular member (80).

3. The joint member of claim 1 or 2, wherein
the joint sealing member (83) has at least either refrigerant resistance or refrigerating machine oil resistance, and is provided on at least an inner peripheral portion of the second inclined surface (81) of the tubular member (80).

4. The joint member of any one of claims 1 to 3, wherein
the joint sealing member (83) is made of a metal material.

5. The joint member of any one of claims 1 to 4, wherein
the joint sealing member (83) is fitted in a groove (86) formed on the second inclined surface (81) of the tubular member (80).

6. The joint member of any one of claims 1 to 5, further comprising:
a pipe sealing member (85) arranged on an inner surface of the tubular member (80) to seal a gap between the inner surface of the tubular member (80) and an outer surface of the pipe (12).

7. The joint member of any one of claims 1 to 6, wherein
the joint sealing member (83) continuously extends from a portion of the second inclined surface (81) of the tubular member (80) to a portion of the inner surface of the tubular member (80).

8. The joint member of any one of claims 1 to 7, wherein
the tubular member (80) fixes the pipe (12) to the joint body (61) in the connected state.

9. The joint member of any one of claims 1 to 8, further comprising:
a pipe fixing member (90) arranged in the space (S) to fix the pipe (12) to the joint body (61) in the connected state.

10. An air conditioner unit for use in an air conditioner (10), the air conditioner unit having a unit-side refrigerant flow path (21, 41) connected to a connection pipe (12A, 12B), wherein
the joint member of any one of claims 1 to 9 is used for connection between the unit-side refrigerant flow path (21, 41) and the connection pipe (12A, 12B).
